# EUROPEAN PATENT SPECIFICATION

(11) **EP 3 546 244 B1**
(45) Date of publication and mention of the grant of the patent: **17.02.2021**
(21) Application number: 19162731.4
(22) Date of filing: 14.03.2019
(51) Int. Cl.: B60C 9/00, C08G 18/80, C08G 18/32, C09J 163/00, C09J 175/04

(54) **ADHESIVE COMPOSITION FOR ORGANIC FIBER, METHOD FOR TREATING ORGANIC FIBER, ORGANIC FIBER, AND TIRE**
KLEBSTOFFZUSAMMENSETZUNG FÜR ORGANISCHE FASERN, VERFAHREN ZUR BEHANDLUNG VON ORGANISCHEN FASERN, ORGANISCHE FASERN UND REIFEN
COMPOSITION ADHÉSIVE POUR FIBRE ORGANIQUE, PROCÉDÉ DE TRAITEMENT DE FIBRE ORGANIQUE, FIBRE ORGANIQUE ET PNEUMATIQUE

(30) Priority: 30.03.2018 JP 2018069803; 30.03.2018 JP 2018069807
(43) Date of publication of application: 02.10.2019
(73) Proprietor: Sumitomo Rubber Industries, Ltd., Kobe-shi, Hyogo-ken 651-0072 (JP); NAGASE CHEMTEX CORPORATION, Osaka 550-8668 (JP)
(72) Inventor: SUZUKI, Masumi, Kobe-shi, Hyogo 651-0072 (JP); KIDA, Yogun, Kobe-shi, Hyogo 651-0072 (JP); KURIHARA, Takuya, Kobe-shi, Hyogo 651-0072 (JP); MIAO, Dong, Kobe-shi, Hyogo 651-0072 (JP); OKABE, Noboru, Kobe-shi, Hyogo 651-0072 (JP); MAEKAWA, Natsuki, Kobe-shi, Hyogo 651-0072 (JP); NAGANO, Toyohiro, Tatsuno-shi, Hyogo 679-4124 (JP); FUSHIKI, Masato, Tatsuno-shi, Hyogo 679-4124 (JP); HOSOMI, Tetsuya, Tatsuno-shi, Hyogo 679-4124 (JP)
(74) Representative: Manitz Finsterwald Patent- und Rechtsanwaltspartnerschaft mbB

(56) References cited:
- JP-A- 2006 274 530
- JP-A- 2010 053 469

## Description

### BACKGROUND OF THE INVENTION

### 1. Field of the Invention

The present invention relates to adhesive compositions for an organic fiber, methods for treating an organic fiber, organic fibers, and tires.

### 2. Description of the Related Art

Hitherto, various fibers such as polyester fibers, nylon fibers have been widely used as reinforcing materials for tires, and have been selectively used so as to be suited for required performance, various members, and the like. For example, a polyester fiber has excellent dynamic properties (for example, a high elastic modulus) and excellent dimensional stability. However, on the other hand, the polyester fiber has a drawback in that a decrease in adhesiveness to a rubber, which is a material of a tire, in particular, a decrease in adhesive force when being exposed to high temperatures for a long period of time in a state of being embedded in a rubber composition, is significant as compared to that with nylon fibers.

JP2000-212875A proposes that heat-resistant adhesiveness is improved by treating a polyester fiber with a treatment liquid containing a carrier, a blocked isocyanate aqueous solution, an epoxy resin dispersion liquid, and a resorcin-formalin-latex (RFL) adhesive.

JP2008-169504A proposes that adhesion deterioration under high temperatures is reduced by treating a polyester fiber with an adhesive treatment agent obtained by blending a polyepoxide compound, a blocked polyisocyanate compound, a silicate compound, and an ethylene-based unsaturated acid-modified styrene-butadiene rubber latex.

### SUMMARY OF THE INVENTION

However, each of the above polyester fibers cannot be considered to have sufficient heat-resistant adhesiveness as compared to nylon fibers. Under such circumstances, an object of the present disclosure is to provide an adhesive composition for an organic fiber which has excellent heat-resistant adhesiveness that allows an organic fiber and a rubber composition to maintain high adhesive force even when being exposed to high temperature.

In addition, in the case where a tire having various fibers as a reinforcing material is used in a high-speed environment or a high-load environment, the tire cannot be considered to have sufficient high-speed durability. Under such circumstances, an object of the present disclosure is to provide a tire having excellent high-speed durability.

A first aspect of the present disclosure is directed to an adhesive composition for an organic fiber, the adhesive composition containing: (a) an epoxy compound that is a sorbitol polyglycidyl ether and has a chlorine content not greater than 9.6% by weight; and (b) a blocked isocyanate.

In the adhesive composition for the organic fiber, the organic fiber may be at least one type selected from the group consisting of polyester fibers, nylon fibers, aramid fibers, and rayon fibers.

A second aspect of the present disclosure is directed to a method for treating an organic fiber including the steps of:
(1) treating the organic fiber with the adhesive composition for the organic fiber as a first treatment agent; and
(2) treating the organic fiber treated with the first treatment agent, with a second treatment agent containing a resorcin-formalin-rubber latex (RFL).

In the method for treating the organic fiber, the organic fiber may be at least one type selected from the group consisting of polyester fibers, nylon fibers, aramid fibers, and rayon fibers.

A third aspect of the present disclosure is directed to an organic fiber treated with the adhesive composition for the organic fiber.

A fourth aspect of the present disclosure is directed to a tire including at least one or more members selected from the group consisting of a band, a carcass ply, a chafer, and a filler that include the organic fiber.

A fifth aspect of the present disclosure is directed to a tire according to the fourth aspect comprising a band, wherein the band includes a rubber composition and an organic fiber according to the third aspect, and peeling resistance between the rubber composition and the organic fiber is not less than 140 N/25 mm, wherein the peeling resistance between the rubber composition and the organic fiber is evaluated as follows: a sample having a length of 150 mm in the circumferential direction of the tire (longitudinal direction) and a length of 25 mm in a direction perpendicular to the circumferential direction (widthwise direction: not the radial direction of the tire) is taken from the tire; a slit (cut) is formed between the band and a member radially outward of the band in the taken sample; using a tensile tester, the band side and the member side radially outward of the band that have been separated by the slit (cut) are each pinched with parallel chucks, and the band side is pulled at a pulling speed of 50 mm/min in the circumferential direction of the tire; the force required for the pulling is indicated as a force per 25 mm of the sample in the circumferential direction (N/25 mm) and regarded as peeling resistance (N/25 mm).

In the tire, the organic fiber may be at least one type selected from the group consisting of polyester fibers, nylon fibers, aramid fibers, and rayon fibers.

In the tire, the organic fiber may be at least one type selected from the group consisting of polyethylene terephthalate (PET) fibers, polyethylene naphthalate (PEN) fibers, and aramid fibers.

In the tire, the organic fiber may be subjected to an immersion treatment in the adhesive composition for the organic fiber.

In the tire, the rubber composition may contain a rubber component, and an amount of a polyisoprene-based rubber in 100% by weight of the rubber component may be 0 to 70% by weight.

According to the present disclosure, it is possible to obtain an adhesive composition for an organic fiber which has excellent heat-resistant adhesiveness that allows an organic fiber and a rubber composition to maintain high adhesive force even when being exposed to high temperature. In addition, according to the present disclosure, it is possible to obtain a tire having excellent high-speed durability.

### BRIEF DESCRIPTION OF THE DRAWINGS

FIG. 1 is a diagram showing an example of an embodiment of a tire; and
FIG. 2 is a diagram showing an example of an embodiment of a jointless band.

### DESCRIPTION OF THE PREFERRED EMBODIMENTS

The following will specifically describe one example of a preferred embodiment of the present invention. An adhesive composition for an organic fiber according to the present disclosure contains: (a) an epoxy compound that is a sorbitol polyglycidyl ether and has a chlorine content not greater than 9.6% by weight; and (b) a blocked isocyanate.

### (Epoxy Compound)

The epoxy compound is a compound having an epoxy group within the molecule thereof. As the epoxy compound, a sorbitol polyglycidyl ether is used. As the sorbitol polyglycidyl ether, sorbitol diglycidyl ether, sorbitol triglycidyl ether, sorbitol tetraglycidyl ether, sorbitol pentaglycidyl ether, sorbitol hexaglycidyl ether, or a mixture thereof can be used, and sorbitol monoglycidyl ether may be contained. The sorbitol polyglycidyl ether has multiple epoxy groups within one molecule thereof and can form a highly crosslinked structure, and thus the adhesive composition for an organic fiber according to the present disclosure has excellent adhesiveness.

The chlorine content of the epoxy compound is not greater than 9.6% by weight, preferably not greater than 9.5% by weight, more preferably not greater than 9.4% by weight, and further preferably not greater than 9.3% by weight. The lower limit of the chlorine content is not particularly limited, but the chlorine content may be, for example, not less than 1% by weight.

When the chlorine content of the epoxy compound is smaller, the purity of the epoxy group in the epoxy compound is increased and thus the reactivity of the epoxy compound with an isocyanate is increased. Therefore, more excellent heat-resistant adhesiveness can be exhibited, and in the case where an organic fiber treated with the adhesive composition for an organic fiber according to the present disclosure is used for a tire, the tire has more excellent high-speed durability.

In addition, when the purity of the epoxy group in the epoxy compound is increased, the viscosity of the adhesive composition for an organic fiber is decreased, and thus the permeability of the adhesive composition to an organic fiber is enhanced. Therefore, in the case of adhering an organic fiber to a rubber composition, contact between the organic fiber and an amine compound that is contained in the rubber composition and is one cause for a decrease in adhesive force at high temperature can be reduced, and thus degradation of the organic fiber can be inhibited. As a result, more excellent heat-resistant adhesiveness can be exhibited, and in the case where an organic fiber treated with the adhesive composition for an organic fiber according to the present disclosure is used for a tire, the tire has more excellent high-speed durability.

The chlorine content of the epoxy compound can be obtained by the method described in JIS K 7243-3 or the like.

The chlorine content of the epoxy compound can be reduced, for example, by decreasing the amount of epichlorohydrin to be used when synthesizing the epoxy compound.

### (Blocked Isocyanate)

The blocked isocyanate is a compound that is produced by reaction of an isocyanate compound and a blocking agent and temporarily inactivated by a group derived from the blocking agent. When the blocked isocyanate is heated at a predetermined temperature, the group derived from the blocking agent becomes dissociated and an isocyanate group is formed.

As the isocyanate compound, a compound having two or more isocyanate groups within the molecule thereof can be used. As a diisocyanate having two isocyanate groups, for example, hexamethylene diisocyanate, diphenylmethane diisocyanate, xylylene diisocyanate, isophorone diisocyanate, phenylene diisocyanate, tolylene diisocyanate, trimethylhexamethylene diisocyanate, meta-phenylene diisocyanate, naphthalene diisocyanate, diphenyl ether diisocyanate, diphenylpropane diisocyanate, biphenyl diisocyanate, and isomers, alkyl-substituted products, halides, and benzene ring hydrogenated products thereof can be used. Furthermore, triisocyanates having three isocyanate groups, tetraisocyanates having four isocyanate groups, polymethylene polyphenyl polyisocyanates, can be also used. One of these isocyanate compounds can be used individually, or two or more of these isocyanate compounds can be used in combination.

Among them, tolylene diisocyanate, meta-phenylene diisocyanate, diphenylmethane diisocyanate, hexamethylene diisocyanate, and polymethylene polyphenyl polyisocyanates are particularly preferable since these compounds are easily available industrially, the heat-resistant adhesiveness of an obtained adhesive composition for an organic fiber after treatment is favorable, and the high-speed durability of a tire according to the present disclosure is also favorable.

Examples of the blocking agent include: lactam-based blocking agents such as ε-caprolactam, δ-valerolactam, γ-butyrolactam, β-propiolactam, and the like; phenol-based blocking agents such as phenol, cresol, resorcinol, xylenol, alcohol-based blocking agents such as methanol, ethanol, n-propyl alcohol, isopropyl alcohol, n-butyl alcohol, isobutyl alcohol, tert-butyl alcohol, ethylene glycol monoethyl ether, ethylene glycol monobutyl ether, diethylene glycol monoethyl ether, propylene glycol mono methyl ether, benzyl alcohol; oxime-based blocking agents such as formamidoxime, acetaldoxime, acetoxime, methyl ethyl ketoxime, diacetyl monoxime, benzophenone oxime, cyclohexane oxime, active methylene-based blocking agents such as dimethyl malonate, diethyl malonate, ethyl acetoacetate, methyl acetoacetate, acetylacetone. Among them, lactam-based blocking agents, phenol-based blocking agents, and oxime-based blocking agents are preferable since these blocking agents become rapidly separated from the isocyanate compound at relatively low temperatures.

The amount of the blocked isocyanate in the adhesive composition for an organic fiber according to the present disclosure per 100 parts by weight of the epoxy compound is preferably not less than 50 parts by weight and not greater than 500 parts by weight, and more preferably not less than 200 parts by weight and not greater than 400 parts by weight. When the amount of the blocked isocyanate is set within this range, more excellent heat-resistant adhesiveness between an organic fiber and a rubber composition is exhibited, and the tire according to the present disclosure exhibits more excellent high-speed durability. If the amount of the blocked isocyanate is less than 50 parts by weight, crosslinking becomes insufficient, which may cause a decrease in adhesive force or heat resistance. If the amount of the blocked isocyanate exceeds 500 parts by weight, the fiber may become excessively hard, or the fatigue resistance may be decreased. Therefore, it is not preferable that the amount of the blocked isocyanate is less than 50 parts by weight or exceeds 500 parts by weight. The amount of the blocked isocyanate can be adjusted as appropriate in accordance with the type of the rubber composition to which the organic fiber is to be adhered.

### (Optional Components of Adhesive Composition for Organic Fiber)

As long as achievement of the objects and the advantageous effects of the present invention is not disturbed, the following optional components may be contained as necessary in the adhesive composition for an organic fiber according to the present disclosure. Examples of optional components include an epoxy compound other than the sorbitol polyglycidyl ether, a resin that is copolymerizable with the sorbitol polyglycidyl ether, a curing agent other than the blocked isocyanate, an organic thickener, an oxidation inhibitor, a light stabilizer, an adhesion improver, a reinforcer, a softener, a colorant, a leveling agent, a flame retardant, an antistatic agent.

Examples of the epoxy compound other than the sorbitol polyglycidyl ether include; glycidyl ethers such as ethylene glycol glycidyl ether, glycerol polyglycidyl ether, diglycerol polyglycidyl ether, polyglycerol polyglycidyl ether, bisphenol A diglycidyl ether, bisphenol S diglycidyl ether, novolak glycidyl ether, bromized bisphenol A diglycidyl ether, and the like; glycidyl esters such as hexahydrophthalic acid glycidyl ester, dimer acid glycidyl ester; glycidyl amines such as triglycidyl isocyanurate, glycidyl hydantoin, tetraglycidyl diamino diphenylmethane, triglycidyl para-aminophenol, triglycidyl meta-aminophenol, diglycidyl aniline, diglycidyl toluidine, tetraglycidyl meta-xylenediamine, diglycidyl tribromoaniline, tetraglycidyl bis-aminomethyl cyclohexane; alicyclic or aliphatic epoxides such as 3,4-epoxycyclohexylmethyl carboxylate, epoxidized polybutadiene, epoxidized soybean oil.

### [Organic Fiber]

The adhesive composition for an organic fiber according to the present disclosure can be used for treating various organic fibers. An organic fiber treated with the adhesive composition for an organic fiber according to the present disclosure can maintain high adhesive force with a rubber composition even when being exposed to high temperature and has excellent heat-resistant adhesiveness.

Examples of the various organic fibers include fibers that are normally used as a reinforcing material for: tires; various hoses; belts for transmitting rotation such as a timing belt, a conveyor belt, a V belt. Examples of the types of the fibers include polyester fibers such as polyethylene terephthalate (PET) fibers, polyethylene naphthalate (PEN) fibers; nylon fibers; rayon fibers; vinylon fibers; aramid fibers; polyurethane fibers.

Among these organic fibers, at least one type selected from the group consisting of polyester fibers such as polyethylene terephthalate (PET) fibers, polyethylene naphthalate (PEN) fibers, nylon fibers, aramid fibers and rayon fibers is preferably used since, even in the case where a material obtained by adhering the organic fiber and the rubber composition is used for, for example, a tire or the like, the material has excellent resistance to a load or shock during use.

The forms of these organic fibers are not particularly limited, and examples thereof include a filament yarn, a cord, a woven product, a woven fabric. The cord may be formed by twisting one or more filament yarns.

As a cord formed from a polyester fiber (polyester cord), for example, i) a cord obtained by firstly twisting together two or three multifilaments having 1100 dtex 10-60 times/10 cm to obtain two cords (in other words, 1100/2 dtex or 1100/3 dtex) and then secondly twisting together the two firstly twisted cords the same number of times in a direction opposite to that of the first twisting (intermediate elongation when a constant load of 44 N is applied: 4.30%), or ii) a cord obtained by firstly twisting together two multifilaments having 1670 dtex 20-50 times/10 cm to obtain two cords (in other words, 1670/2 dtex) and then secondly twisting together the two firstly twisted cords the same number of times in a direction opposite to that of the first twisting (intermediate elongation when a constant load of 66 N is applied: 4.30%), can be used. The intermediate elongation can be obtained according to the test method for "rate of elongation at constant load" in JIS L1017.

As a cord formed from a nylon fiber (nylon cord), for example, i) a cord obtained by firstly twisting together two multifilaments having 940 dtex 31-48 times/10 cm to obtain two cords (in other words, 940/2 dtex) and then secondly twisting together the two firstly twisted cords the same number of times in a direction opposite to that of the first twisting (intermediate elongation when a constant load of 44 N is applied: 8.80%), or ii) a cord obtained by firstly twisting together two multifilaments having 1400 dtex 30-51 times/10 cm to obtain two cords (in other words, 1400/2 dtex) and then secondly twisting together the two firstly twisted cords the same number of times in a direction opposite to that of the first twisting (intermediate elongation when a constant load of 66 N is applied: 8.80%), can be used.

As a cord formed from a rayon fiber (rayon cord), for example, a cord obtained by firstly twisting together two multifilaments having 1840 dtex 20-50 times/10 cm to obtain two cords (in other words, 1840/2 dtex) and then secondly twisting together the two firstly twisted cords the same number of times in a direction opposite to that of the first twisting (intermediate elongation when a constant load of 44 N is applied: 4.80%), can be used.

As a cord formed from an aramid fiber (aramid cord), for example, a cord obtained by firstly twisting together two or three aromatic polyamide multifilaments having 1670 dtex (Kevlar manufactured by E.I. du Pont de Nemours and Company) 30-78 times/10 cm to obtain two cords (in other words, 1670/2 dtex or 1670/3 dtex) and then secondly twisting together the two firstly twisted cords the same number of times in a direction opposite to that of the first twisting (intermediate elongation when a constant load of 44 N is applied: 0.7 to 1.5%) can be used.

As a cord formed from a polyester fiber and a nylon fiber (polyester-nylon hybrid cord), for example, a cord obtained by firstly twisting together a polyester multifilament having 1440 dtex and a nylon multifilament having 1400 dtex 30-38 times/10 cm to obtain two cords (in other words, 1440-P/1400-N dtex) and then secondly twisting together the two firstly twisted cords the same number of times in a direction opposite to that of the first twisting (intermediate elongation when a constant load of 44 N is applied: 4.40%, intermediate elongation when a constant load of 66 N is applied: 6.30%), can be used.

As a cord formed from an aramid fiber and a nylon fiber (aramid-nylon hybrid cord), for example, a cord obtained by firstly twisting together two multifilaments, that is, an aramid multifilament having 1100 dtex and a nylon multifilament having 940 dtex 42 times/10 cm to obtain two cords (in other words, 1100-K/940-N dtex) and then secondly twisting together the two firstly twisted cords the same number of times in a direction opposite to that of the first twisting (intermediate elongation when a constant load of 44 N is applied: 3.60%), can be used.

### [Treatment Method]

The method for treating an organic fiber according to the present disclosure includes the following steps (1) and (2):
(1) treating the organic fiber with the adhesive composition for an organic fiber as a first treatment agent; and (2) treating the organic fiber treated with the first treatment agent, with a second treatment agent containing a resorcin-formalin-rubber latex (RFL).

The step (1) of treating the organic fiber with the adhesive composition for an organic fiber as the first treatment agent will be described in detail.

The first treatment agent is the adhesive composition for an organic fiber, and treating the organic fiber with the adhesive composition for an organic fiber includes a treatment performed for attaching various components contained in the adhesive composition for an organic fiber to the organic fiber and a subsequent heating treatment.

As the attaching method, for example, an arbitrary method such as application using a roller, spraying from a nozzle, immersion into a bath liquid (the adhesive composition for an organic fiber), and the like can be used. From the viewpoint of uniform attachment and removal of excess adhesive, attachment by immersion is preferable. In other words, as the method for treating the organic fiber with the adhesive composition for an organic fiber, an immersion treatment is preferable.

In order to adjust the attached amount to the organic fiber, a means such as squeezing by pressure contact rollers, scraping by a scraper or the like, blowing by air blast, suction, hitting by a beater, and the like may be adopted. In particular, after immersion, a squeezing step with pressure contact rollers is preferably further performed.

An example of the heating method is a method in which the organic fiber having the adhesive composition for an organic fiber attached thereto is dried at a temperature not lower than 100°C and not higher than 250°C for a time not shorter than 1 minute and not longer than 5 minutes and then further thermally treated at a temperature not lower than 150°C and not higher than 250°C for a time not shorter than 1 minute and not longer than 5 minutes. The conditions for the thermal treatment after drying are preferably a temperature not lower than 180°C and not higher than 240°C and a time not shorter than 1 minute and not longer than 2 minutes. This is because, in particular, in the thermal treatment after drying, if the temperature is excessively low, adhesive force of the organic fiber to the rubber composition may become insufficient, and if the temperature is excessively high, the organic fiber may be degraded, causing a decrease in strength.

The amount of the adhesive composition for an organic fiber attached to the organic fiber is preferably not less than 0.2% by weight and not greater than 1.8% by weight, and more preferably not less than 0.5% by weight and not greater than 1.5% by weight. This is because: if this amount is less than 0.2% by weight, the attached amount may become insufficient and sufficient adhesive force may not be obtained; and if this amount exceeds 1.8% by weight, the fiber may become hard and bending fatigue strength and the like may be decreased. Here, the attached amount (% by weight) is the weight of solid content in the composition that is obtained with the weight of the organic fiber being 100.

In order to obtain sufficient adhesive force and also prevent an obtained fiber from becoming excessively hard, the total solid content concentration of the adhesive composition for an organic fiber is preferably not less than 0.9% by weight and not greater than 8.1% by weight, and more preferably not less than 2.3% by weight and not greater than 6.5% by weight.

The step (2) of treating the organic fiber treated with the first treatment agent, with the second treatment agent containing the resorcin-formalin-rubber latex (RFL), will be described in detail.

The second treatment agent is a composition containing a resorcin-formalin-rubber latex (RFL).

The resorcin-formalin-rubber latex (RFL) can be prepared by mixing and aging an initial condensate of resorcin and formalin and a rubber latex.

The initial condensate of resorcin and formalin is obtained by performing condensation through reaction of a resorcin monomer and a formaldehyde monomer in water in the presence of an acid catalyst such as hydrochloric acid, sulfuric acid, an alkali metal hydroxide such as sodium hydroxide or ammonia.

Regarding the initial condensate, the mole ratio of the resorcin monomer to the formaldehyde monomer is preferably 1:0.1 to 1:8, more preferably 1:0.5 to 1:5, and further preferably 1:1 to 1:4.

As the rubber latex, a natural rubber latex, a styrene-butadiene copolymer latex, a styrene-butadiene-vinylpyridine copolymer latex can be used. In the resorcin-formalin-rubber latex (RFL), the ratio of the initial condensate of resorcin and formalin to the rubber latex is preferably 1:1 to 1:15 and more preferably 1:3 to 1:12 as a solid content ratio.

These latexes can be used individually, or a mixture of two or more of these latexes can be used. In particular, a styrene-butadiene-vinylpyridine copolymer latex is preferable since high adhesive force to natural rubber or SBR (styrene-butadiene rubber) is obtained.

The initial condensate of resorcin and formalin can contain the resorcin monomer, the formaldehyde monomer, a very small amount of a molecular weight modifier (for example, calcium chloride or the like), a solvent (for example, MEK: methyl ethyl ketone, or the like.), and the like.

Treating the organic fiber treated with the first treatment agent, with the second treatment agent containing the resorcin-formalin-rubber latex (RFL), is a treatment performed for attaching the second treatment agent to the organic fiber treated with the first treatment agent, and can be carried out with the same means and under the same conditions as when the organic fiber is treated with the first treatment agent. Also in the case of the treatment with the second treatment agent, attachment by immersion is preferable, as the attaching method, from the viewpoint of uniform attachment and removal of excess adhesive.

In order to adjust the attached amount to the organic fiber, a means such as squeezing by pressure contact rollers, scraping by a scraper or the like, blowing by air blast, suction, hitting by a beater, and the like may be adopted. In particular, after immersion, a squeezing step with pressure contact rollers is preferably further performed.

The amount of the second treatment agent attached to the organic fiber is preferably not less than 1.0% by weight and not greater than 3.0% by weight, and more preferably not less than 1.5% by weight and not greater than 2.5% by weight. This is because: if this amount is less than 1.0% by weight, the attached amount is small and adhesive force may become insufficient; and if this amount exceeds 3.0% by weight, the fiber may become hard and bending fatigue strength and the like may be decreased. The amount of the second treatment agent attached to the organic fiber (% by weight) indicates the weight of solid content in the second treatment agent that is obtained with the weight of the organic fiber being 100.

In order to obtain sufficient adhesive force and also prevent an obtained fiber from becoming excessively hard, the total solid content concentration of the second treatment agent is preferably not less than 0.9% by weight and not greater than 29% by weight, and more preferably not less than 14% by weight and not greater than 23% by weight.

In addition to the initial condensate of resorcin and formalin and the rubber latex, a vulcanization regulator, zinc oxide, an oxidation inhibitor, a deforming agent, may be added to the second treatment agent.

### [Use]

The organic fiber treated with the adhesive composition for an organic fiber according to the present disclosure can be used for tires, various hoses, belts for transmitting rotation, or the like. The organic fiber can be used as reinforcing materials for tires, various hoses, or belts for transmitting rotation as follows: specifically, for example, the organic fiber is included within the tires, the various hoses, or the belts; and more specifically, for example, one obtained by twisting together a plurality of such organic fibers (may be one obtained by twisting one or more filament yarns) is disposed within the tires, the various hoses, or the belts, or such organic fibers are made into short fibers and dispersed within the tires, the various hoses, or the belts.

The organic fiber treated with the adhesive composition for an organic fiber according to the present disclosure can maintain high adhesive force with a rubber composition even when being exposed to high temperature and has excellent heat-resistant adhesiveness.
Thus, the organic fiber can be preferably used for a tire that is used in an environment in which the tire is exposed to high temperatures for a long period of time. In particular, the organic fiber can be preferably used for at least one or more members selected from the group consisting of a band, a carcass ply, a chafer, and a filler of a tire.

### [Tire]

The tire according to the present disclosure may be a tire including a band, the band may include a rubber composition and the organic fiber treated with the adhesive composition for an organic fiber, and the peeling resistance between the rubber composition and the organic fiber may be 140 N/25 mm or greater. In addition, the band may be an organic fiber-rubber composition complex obtained by combining the organic fiber and the rubber composition.

The band is a member that is provided outward of a belt in the radial direction of the tire in order to inhibit lifting of the belt from a carcass due to centrifugal force generated by rotation of the tire during running of a vehicle, as will be described later. The band may be a jointless band having a so-called jointless structure.

The band, in particular, the jointless band, is a member that is provided outward of the belt in the radial direction of the tire in order to inhibit lifting of the belt from a carcass due to centrifugal force generated by rotation of the tire during running of the vehicle, as will be described later. The belt is a member that is disposed within a tread of the tire and outward of the carcass in the radial direction.

A carcass ply or the carcass is a member that is disposed within the tread of the tire and outward of an inner liner in the radial direction. Here, in particular, a member composed of one carcass ply or two or more carcass plies is referred to as a carcass. The inner liner is a member that is formed so as to form a tire inner surface. Owing to this member, an amount of air permeation can be reduced, and the internal pressure of the tire can be maintained.

A chafer is a member that is located at a bead portion of the tire, is brought into contact with a rim of a wheel, and protects the carcass ply or the carcass within the tire from friction against the rim.

A filler is a member that is disposed at the bead portion of the tire and enhances the stiffness of the bead portion.

### (Adhesion to Rubber Composition)

In the case where the tire according to the present disclosure includes a band, the band can be obtained by treating an organic fiber with the adhesive composition for an organic fiber and then adhering the organic fiber to a rubber composition. A carcass ply, a chafer, a filler is also obtained by treating an organic fiber with the adhesive composition for an organic fiber and then adhering the organic fiber to a rubber composition.

Adhesion of the organic fiber treated with the adhesive composition for an organic fiber and the rubber composition can be achieved by bringing the organic fiber treated with the adhesive composition for an organic fiber and the rubber composition into contact with each other and performing a heating treatment to cause crosslinking reaction of the rubber composition. Examples of the conditions for the heating treatment include a temperature not lower than 150°C and not higher than 200°C and a time not shorter than 1 minute and not longer than 15 minutes, 170°C and 12 minutes.

### [Peeling Resistance]

In the case where the tire according to the present disclosure includes a band, the peeling resistance between the rubber composition and the organic fiber in the tire including the band is preferably not less than 140 N/25 mm, more preferably not less than 160 N/25 mm, and further preferably not less than 180 N/25 mm. The high-speed durability can be further improved. The upper limit of the peeling resistance is not particularly limited. However, from the viewpoint of durability to running at a high speed, the peeling resistance may be 220 N/25 mm or less and may be 200 N/25 mm or less, for example.

The peeling resistance between the rubber composition and the organic fiber can be evaluated as follows. A sample having a length of 150 mm in the circumferential direction of the tire (longitudinal direction) and a length of 25 mm in a direction perpendicular to the circumferential direction (widthwise direction: not the radial direction of the tire) is taken from the tire. A slit (cut) is formed between the band and a member radially outward of the band (for example, a belt) in the taken sample. Using a tensile tester, the band side and the member (for example, the belt) side radially outward of the band that have been separated by the slit (cut) are each pinched with parallel chucks, and the band side is pulled at a pulling speed of 50 mm/min in the circumferential direction of the tire. The force required for the pulling is indicated as a force per 25 mm of the sample in the circumferential direction (N/25 mm) and regarded as peeling resistance (N/25 mm).

### (Rubber Composition)

In the case where the tire according to the present disclosure includes a band, the rubber composition of the band is not particularly limited as long as the rubber composition contains a rubber component.

Examples of the rubber component include: conjugated diene polymers such as polyisoprene-based rubbers, butadiene rubber (BR), styrene-butadiene rubber (SBR), styreneisoprene-butadiene rubber (SIBR), chloroprene rubber (CR), acrylonitrile-butadiene rubber (NBR); and non-diene polymers such as ethylene-propylene rubber (EPDM), isobutylene-isoprene rubber (IIR), halogenated isobutylene-isoprene rubber (X-IIR). Various rubber components may be individually used, or two or more of these rubber components may be used in combination. Among them, SBR and/or a polyisoprene-based rubber is preferably contained since they have excellent mechanical strength, reversion resistance, heat resistance, and crack growth resistance.

Examples of polyisoprene-based rubbers include isoprene rubber (IR), natural rubber (NR), reformed natural rubber. Examples of NR include deproteinized natural rubber (DPNR) and high pure natural rubber (HPNR), and examples of reformed natural rubber include epoxidized natural rubber (ENR), hydrogenated natural rubber (HNR), grafted natural rubber. In addition, as NR, NRs that are generally used in the tire industry, such as SIR20, RSS#3, TSR20, can be used. Among them, NR and IR are preferable, and NR is more preferable since it has excellent elongation at break and breaking strength.

Butadiene rubber (BR) is not particularly limited. As BR, BRs that are generally used in the tire industry, including BR having a high cis content such as BR1220 manufactured by Zeon Corporation and BR150B manufactured by Ube Industries, Ltd. and the like, BR containing 1,2-syndiotactic polybutadiene crystal (SPB) such as VCR412 and VCR617 manufactured by Ube Industries, Ltd. and the like, and BR synthesized by using an Nd catalyst such as BUNA CB 25 and BUNA CB 24 manufactured by LANXESS, and the like, can be used. In addition, tin-modified butadiene rubber (tin-modified BR) modified with a tin compound may be also used.

Styrene-butadiene rubber (SBR) is not particularly limited, and examples thereof include emulsion-polymerized styrene-butadiene rubber (E-SBR), solution-polymerized styrene-butadiene rubber (S-SBR), and modified SBR modified with 3-aminopropyldimethylmethoxysilane. Among them, E-SBR is preferable for the reason that it contains a large amount of a high-molecular-weight polymer component and has excellent elongation at break.

As the rubber component, a conjugated diene polymer is preferably contained, but the amount of the conjugated diene polymer in 100% by weight of the rubber component is not particularly limited.

The amount of the conjugated diene polymer in 100% by weight of the rubber component is preferably not less than 10% by weight, more preferably not less than 30% by weight, much more preferably not less than 50% by weight, and further preferably not less than 80% by weight. The upper limit of the amount of the conjugated diene polymer is not particularly limited, and the amount of the conjugated diene polymer may be 100% by weight.

The amount of a polyisoprene-based rubber in 100% by weight of the rubber component may be 0% by weight, but is preferably not less than 10% by weight and more preferably not less than 30% by weight. The amount of the polyisoprene-based rubber is preferably not greater than 90% by weight and more preferably not greater than 70% by weight. This is because, when the amount is within these ranges, adhesiveness to an organic fiber (in particular, a cord) and breaking strength can be enhanced.

The amount of a conjugated diene polymer other than the polyisoprene-based rubber is preferably not less than 10% by weight and more preferably not less than 30% by weight. The amount of the conjugated diene polymer other than the polyisoprene-based rubber is preferably not greater than 90% by weight and more preferably not greater than 70% by weight. This is because, when the amount is within these ranges, tear strength can be increased and heat generation of the rubber can be inhibited.

In 100% by weight of the rubber component, preferably, the amount of the polyisoprene-based rubber is 0 to 70% by weight, and the amount of the conjugated diene polymer other than the polyisoprene-based rubber is 30 to 70% by weight. More preferably, the amount of the polyisoprene-based rubber is 50 to 70% by weight, and the amount of the conjugated diene polymer other than the polyisoprene-based rubber is 30 to 50% by weight. This is because, when the amounts are within these ranges, adhesiveness to an organic fiber (in particular, a cord) and crack growth resistance can be enhanced.

The conjugated diene polymer other than the polyisoprene-based rubber is desirably SBR and/or BR, and is more desirably SBR.

### (Optional Components of Rubber Composition)

As long as achievement of the objects and the advantageous effects of the present invention is not disturbed, ingredients that are generally used for production of a rubber composition, for example, a strength improving agent such as sulfur, carbon black, silica; a reinforcing filler such as clay; a silane coupling agent; stearic acid; zinc oxide; various antioxidants; oil such as aroma oil; wax; a vulcanization accelerator; a vulcanization accelerator aid; and the like, may be blended as appropriate in the rubber composition.

By blending carbon black in the rubber composition, more preferable reinforcement is ensured, and the complex elastic modulus, the low heat generation properties, the elongation at break, and the durability of the rubber composition can be improved in a balanced manner.

The nitrogen adsorption specific surface area (N₂SA) of the carbon black is preferably not less than 38 m²/g, more preferably not less than 60 m²/g, and further preferably not less than 90 m²/g. If the N₂SA of the carbon black is less than 38 m²/g, sufficient reinforcement is not ensured, so that the hardness and the elongation at break (when the tire is new, after thermal oxidation degradation) tend to be decreased. The N₂SA of the carbon black is preferably not greater than 125 m²/g and more preferably not greater than 115 m²/g. If the N₂SA of the carbon black exceeds 125 m²/g, low fuel consumption performance and processability (sheet reliability) tend to be decreased. The nitrogen adsorption specific surface area of the carbon black is a value measured by Method A at page 7 of JIS K6217.

The amount of the carbon black per 100 parts by weight of the rubber component is preferably not less than 10 parts by weight and more preferably not less than 20 parts by weight. If the amount of the carbon black is less than 10 parts by weight, the rubber composition does not ensure sufficient reinforcement, so that the complex elastic modulus thereof tends to be decreased. In addition, sufficient elongation at break is not exhibited, so that the durability tends to be decreased. The amount of the carbon black is preferably not greater than 55 parts by weight and more preferably not greater than 50 parts by weight. If the amount of the carbon black exceeds 55 parts by weight, the low heat generation properties, the elongation at break, and the processability (sheet reliability), and the durability of the rubber composition tend to be decreased.

By blending silica in the rubber composition, the elongation at break of the rubber composition and the adhesiveness of the rubber composition to an organic fiber (in particular, a cord) can be improved.

The silica is not particularly limited, and examples of the silica include dry-process silica (silicic anhydride), wet-process silica (hydrous silicic acid). Wet-process silica is preferable since it has a higher silanol group content.

The nitrogen adsorption specific surface area (N₂SA) of the silica is preferably not less than 80 m²/g, more preferably not less than 100 m²/g, and further preferably not less than 110 m²/g. If the N₂SA of the silica is less than 80 m²/g, the elongation at break is decreased, so that the durability tends to be decreased. The N₂SA of the silica is preferably not greater than 250 m²/g, more preferably not greater than 235 m²/g, and further preferably not greater than 220 m²/g. If the N₂SA of the silica exceeds 250 m²/g, the low fuel consumption performance and the processability (sheet rollability) tend to be decreased. The nitrogen adsorption specific surface area of the silica is a value measured by the BET method according to ASTM D3037-81.

In the case of containing the silica, the amount of the silica per 100 parts by weight of the rubber component is preferably not less than 5 parts by weight and more preferably not less than 7 parts by weight. If the amount of the silica is less than 5 parts by weight, the elongation at break is decreased, so that the durability tends to be decreased. In addition, the low fuel consumption performance also tends to be deteriorated. The amount of the silica is preferably not greater than 17 parts by weight, more preferably not greater than 15 parts by weight, and further preferably not greater than 13 parts by weight. If the amount of the silica exceeds 17 parts by weight, the dispersibility of the silica is decreased, so that a complex elastic modulus E* tends to be decreased. In addition, during heating at the time of rolling or during storage after rolling, the silica re-aggregates, so that the processability tends to be decreased.

### [Organic Fiber]

In the case where the tire according to the present disclosure includes a band, examples of various organic fibers included in the band include fibers that are normally used as a reinforcing material for: tires; various hoses; belts for transmitting rotation such as a timing belt, a conveyor belt, a V belt. Examples of the types of the fibers include polyester fibers such as polyethylene terephthalate (PET) fibers, polyethylene naphthalate (PEN) fibers; nylon fibers; rayon fibers; vinylon fibers; aramid fibers; polyurethane fibers.

Among these organic fibers, at least one type selected from the group consisting of polyester fibers such as polyethylene terephthalate (PET) fibers, polyethylene naphthalate (PEN) fibers, nylon fibers, aramid fibers, and rayon fibers is preferably used since the tire has excellent resistance to a load or shock.

Among these organic fibers, at least one type selected from the group consisting of polyethylene terephthalate (PET) fibers, polyethylene naphthalate (PEN) fibers, and aramid fibers is preferably used since the tire can inhibit shape change caused by centrifugal force even during running at a high speed.

The forms of these organic fibers are not particularly limited, and examples thereof include a filament yarn, a cord, a woven product, a woven fabric. The cord may be formed by twisting one or more filament yarns.

As a cord formed from a polyester fiber (polyester cord), for example, i) a cord obtained by firstly twisting together two or three multifilaments having 1100 dtex 10-60 times/10 cm to obtain two cords (in other words, 1100/2 dtex or 1100/3 dtex) and then secondly twisting together the two firstly twisted cords the same number of times in a direction opposite to that of the first twisting (intermediate elongation when a constant load of 44 N is applied: 4.30%), or ii) a cord obtained by firstly twisting together two multifilaments having 1670 dtex 20-50 times/10 cm to obtain two cords (in other words, 1670/2 dtex) and then secondly twisting together the two firstly twisted cords the same number of times in a direction opposite to that of the first twisting (intermediate elongation when a constant load of 66 N is applied: 4.30%), can be used. The intermediate elongation can be obtained according to the test method for "rate of elongation at constant load" in JIS L1017.

As a cord formed from a nylon fiber (nylon cord), for example, i) a cord obtained by firstly twisting together two multifilaments having 940 dtex 31-48 times/10 cm to obtain two cords (in other words, 940/2 dtex) and then secondly twisting together the two firstly twisted cords the same number of times in a direction opposite to that of the first twisting (intermediate elongation when a constant load of 44 N is applied: 8.80%), or ii) a cord obtained by firstly twisting together two multifilaments having 1400 dtex 30-51 times/10 cm to obtain two cords (in other words, 1400/2 dtex) and then secondly twisting together the two firstly twisted cords the same number of times in a direction opposite to that of the first twisting (intermediate elongation when a constant load of 66 N is applied: 8.80%), can be used.

As a cord formed from a rayon fiber (rayon cord), for example, a cord obtained by firstly twisting together two multifilaments having 1840 dtex 20-50 times/10 cm to obtain two cords (in other words, 1840/2 dtex) and then secondly twisting together the two firstly twisted cords the same number of times in a direction opposite to that of the first twisting (intermediate elongation when a constant load of 44 N is applied: 4.80%), can be used.

As a cord formed from an aramid fiber (aramid cord), for example, a cord obtained by firstly twisting together two or three aromatic polyamide multifilaments having 1670 dtex (Kevlar manufactured by E.I. du Pont de Nemours and Company) 30-78 times/10 cm to obtain two cords (in other words, 1670/2 dtex or 1670/3 dtex) and then secondly twisting together the two firstly twisted cords the same number of times in a direction opposite to that of the first twisting (intermediate elongation when a constant load of 44 N is applied: 0.7 to 1.5%) can be used.

As a cord formed from a polyester fiber and a nylon fiber (polyester-nylon hybrid cord), for example, a cord obtained by firstly twisting together a polyester multifilament having 1440 dtex and a nylon multifilament having 1400 dtex 30-38 times/10 cm to obtain two cords (in other words, 1440-P/1400-N dtex) and then secondly twisting together the two firstly twisted cords the same number of times in a direction opposite to that of the first twisting (intermediate elongation when a constant load of 44 N is applied: 4.40%, intermediate elongation when a constant load of 66 N is applied: 6.30%), can be used.

As a cord formed from an aramid fiber and a nylon fiber (aramid-nylon hybrid cord), for example, a cord obtained by firstly twisting together two multifilaments, that is, an aramid multifilament having 1100 dtex and a nylon multifilament having 940 dtex 42 times/10 cm to obtain two cords (in other words, 1100-K/940-N dtex) and then secondly twisting together the two firstly twisted cords the same number of times in a direction opposite to that of the first twisting (intermediate elongation when a constant load of 44 N is applied: 3.60%), can be used.

### [Production of Tire]

In the case where the tire according to the present disclosure includes a band, the tire including the band can be produced by an ordinary method using the above rubber composition. The rubber composition is extruded in an uncrosslinked state and molded in accordance with the shapes of members such as the band, a belt, and an organic fiber is interposed in the molded uncrosslinked rubber composition to obtain each member such as the band, the belt, in which the rubber composition is in an uncrosslinked state. Next, the respective members are attached together with other tire members to form an uncrosslinked tire. Then, the uncrosslinked tire is heated and pressed, whereby a tire can be produced.

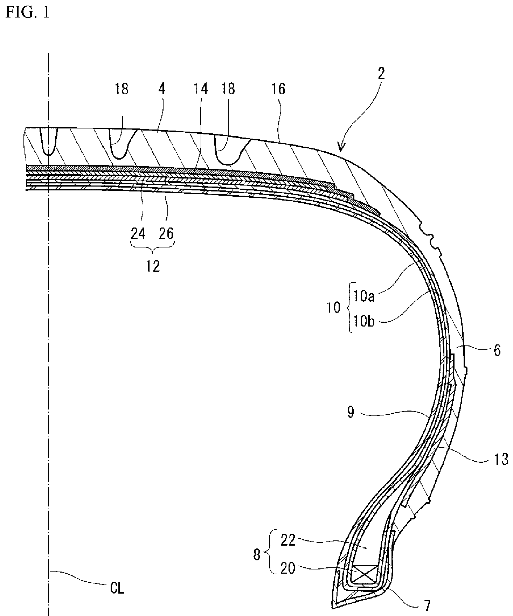

One example of an embodiment of a tire in which the organic fiber according to the present disclosure is used will be described in detail with reference to the drawings. FIG. 1 shows a pneumatic tire 2. In FIG. 1, the up-down direction is the radial direction of the tire 2, the right-left direction is the rotation axis direction of the tire 2, and the direction perpendicular to the surface of the sheet is the circumferential direction of the tire 2. In FIG. 1, an alternate long and short dash line CL represents the equator plane of the tire 2. The shape of the tire 2 is symmetrical about the equator plane CL except for a tread pattern.

The tire 2 includes a tread 4, a pair of sidewalls 6, a pair of chafers 7, a pair of beads 8, an inner liner 9, a carcass 10, a belt 12, a pair of fillers 13, and a jointless band 14. The tire 2 is of a tubeless type. The tire 2 is mounted to a passenger car.

The tread 4 has a shape projecting outward in the radial direction. The tread 4 forms a tread surface 16 that is brought into contact with a road surface. Grooves 18 are formed on the tread 4. The tread pattern is formed by the grooves 18. The tread 4 is formed from a crosslinked rubber that has excellent wear resistance and grip performance.

Each sidewall 6 extends from the edge of the tread 4 substantially inward in the radial direction. The radially outer edge of the sidewall 6 is joined to the tread 4. The sidewall 6 is formed from a crosslinked rubber that has excellent cut resistance and weather resistance.

Each chafer 7 is located near the bead 8. When the tire 2 is mounted to a rim (which is a part of a wheel and is a portion with which a tire is to be combined and which is not shown), the chafer 7 is brought into contact with the rim. Because of this contact, the vicinity of the bead 8 is protected. For example, a carcass ply 10a, a carcass ply 10b, or the carcass 10 within the tire is protected from friction against the rim.

The form of an organic fiber used for the chafer 7 is a cord. The chafer 7 is formed by treating cords with the adhesive composition for an organic fiber and adhering the cords to a rubber composition. Examples of preferable organic fibers include: polyester fibers such as polyethylene terephthalate (PET) fibers, polyethylene naphthalate (PEN) fibers; nylon fibers; rayon fibers; and aramid fibers.

Each bead 8 is located inward of the sidewall 6 in the axial direction. The bead 8 has a core 20 and an apex 22 extending from the core 20 outward in the radial direction. The core 20 has a ring shape and includes a wound non-stretchable wire. A typical material of the wire is steel. The apex 22 is tapered outward in the radial direction. The apex 22 is formed from a highly hard crosslinked rubber.

The inner liner 9 is formed so as to form a tire inner surface. The inner liner 9 is formed from a crosslinked rubber that inhibits air permeation.

The carcass 10 includes two plies, that is, the carcass ply 10a and the carcass ply 10b. The carcass ply 10a and the carcass ply 10b extend on and between the beads 8 at both sides along the tread 4 and the sidewalls 6. The carcass ply 10a and the carcass ply 10b are turned up around each core 20 from the inner side toward the outer side in the axial direction. Each of the carcass ply 10a and the carcass ply 10b includes multiple cords aligned with each other in the circumferential direction, and a topping rubber. The absolute value of the angle of each cord relative to the equator plane CL is 75° to 90°. In other words, the carcass ply 10a and the carcass ply 10b each have a radial structure. In addition, the carcass 10 may be formed from one carcass ply or three or more carcass plies other than two carcass plies.

The form of an organic fiber used for the carcass ply 10a and the carcass ply 10b is a cord. The carcass ply 10a and the carcass ply 10b are each formed by treating cords with the adhesive composition for an organic fiber and adhering the cords to a rubber composition. Examples of preferable organic fibers include: polyester fibers such as polyethylene terephthalate (PET) fibers, polyethylene naphthalate (PEN) fibers; nylon fibers; rayon fibers; and aramid fibers.

The belt 12 is located inward of the tread 4 in the radial direction. The belt 12 is layered over the carcass 10. The belt 12 reinforces the carcass 10. The belt 12 includes an inner layer 24 and an outer layer 26. As is obvious from FIG. 1, in the axial direction, the width of the inner layer 24 is slightly larger than that of the outer layer 26. Although not shown, each of the inner layer 24 and the outer layer 26 includes multiple cords aligned with each other, and a topping rubber. Each cord is tilted relative to the equator plane CL. The absolute value of a tilt angle is generally not less than 10° and not greater than 35°. The direction in which the cords of the inner layer 24 are titled relative to the equator plane CL is opposite to the direction in which the cords of the outer layer 26 are tilted relative to the equator plane CL. As the cords, not only steel cords but also the organic fiber according to the present disclosure may be used.

Each filler 13 is disposed at the bead portion of the tire. Each filler includes multiple cords aligned with each other, and a topping rubber.

The form of an organic fiber used for the filler 13 is a cord. The filler 13 is formed by treating cords with an adhesive for an organic fiber and adhering the cords to a rubber composition. Examples of preferable organic fibers include: polyester fibers such as polyethylene terephthalate (PET) fibers, polyethylene naphthalate (PEN) fibers; nylon fibers; rayon fibers; and aramid fibers.

The jointless band 14 is located outward of the belt 12 in the radial direction. In the axial direction, the width of the jointless band 14 is larger than that of the belt 12. The jointless band 14 reinforces the belt 12.

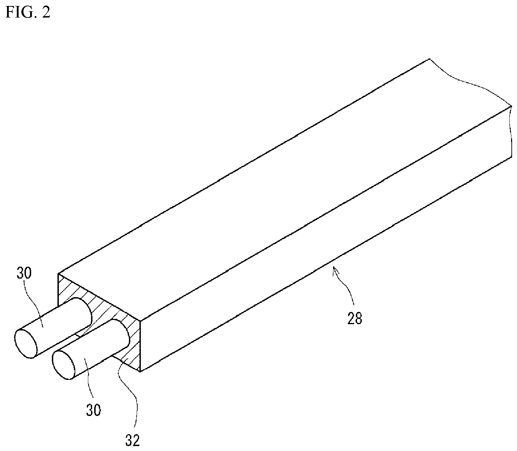

FIG. 2 shows a ribbon 28 forming the jointless band 14. The ribbon 28 has two cords 30 and a topping rubber 32. The ribbon 28 is formed by treating the cords 30 with the adhesive composition for an organic fiber and adhering the cords 30 to the topping rubber 32. The jointless band 14 is formed by helically winding the ribbon 28 in the circumferential direction. The jointless band 14 has a so-called jointless structure. Each cord 30 extends substantially in the circumferential direction. The angle of the cord 30 relative to the circumferential direction is preferably not greater than 5° and particularly preferably not greater than 2°. The belt 12 is held by the cords 30, and thus lifting of the belt 12 is inhibited. The number of cords 30 in the ribbon 28 may be one or may be three or more.

Each cord 30 is formed by twisting a plurality of organic fibers. The tire including the cord 30 has excellent heat resistance and durability. Examples of preferable organic fibers for forming the cord 30 include polyester fibers such as polyethylene terephthalate (PET) fibers, polyethylene naphthalate (PEN) fibers; nylon fibers; rayon fibers; aramid fibers.

### EXAMPLES

The present invention will be described in more detail by means of examples below. However, the present invention is not limited to these examples.

Adhesiveness in Examples 1-1 to 1-5 and Comparative Examples 1-1 to 1-5 was evaluated by the following method.

### <Initial Adhesive Force>

A treated organic fiber was embedded in an uncrosslinked rubber containing natural rubber as a main component, and press-crosslinking was performed at 150°C for 30 minutes. Next, the organic fiber was pulled out from the rubber block at a speed of 100 mm/minute, the force required for the pulling-out was represented in N/cm, and adhesiveness was evaluated.

The composition of the uncrosslinked rubber containing natural rubber as a main component is as follows.
TSR20 (TSR is the abbreviation for Technically Specified Rubber): 60 parts by weight, as natural rubber
SBR 1502: 40 parts by weight, as styrene-butadiene rubber
"Seast 300" (manufactured by Tokai Carbon Co., Ltd.): 50 parts by weight, as a reinforcer
Mineral oil: 2 parts by weight, as a softener
"ROBO RD" (manufactured by Ouchi Shinko Chemical Industrial Co., Ltd.): 1 part by weight, as an antioxidant
Stearic acid: 3 parts by weight
Zinc oxide: 6 parts by weight
Powdery sulfur (manufactured by Tsurumi Chemical Industry Co., Ltd.): 4 parts by weight
"Nocceler NS" (manufactured by Ouchi Shinko Chemical Industrial Co., Ltd.: N-tert-butyl-2-benzothiazolylsulfenamide): 1.0 part by weight, as an accelerator

### <Heat-Resistant Adhesive Force>

A treated organic fiber was embedded in an uncrosslinked rubber containing natural rubber as a main component, and press-crosslinking was performed at 170°C for 90 minutes. Next, the organic fiber was pulled out from the rubber block at a speed of 100 mm/minute, the force required for the pulling-out was represented in N/cm, and adhesiveness was evaluated. The composition of the uncrosslinked rubber containing natural rubber as a main component is the same as that in the above evaluation of initial adhesive force.

### (Example 1-1)

An adhesive composition for an organic fiber was prepared as a first treatment agent by adding 11.8 g of ETC-N615 (sorbitol polyglycidyl ether, chlorine content: 9.3% by weight, epoxy equivalent: 163, manufactured by Nagase ChemteX Corporation) as an epoxy compound to 920 g of water while stirring the water, and adding 72.1 g of an ε-caprolactam blocked diphenylmethane diisocyanate aqueous dispersion (54% concentration) as a blocked isocyanate thereto.

An RFL liquid was prepared as a rubber latex by diluting 172 g of Nipol 2518FS (manufactured by Zeon Corporation, a vinylpyridine-styrene-butadiene terpolymer aqueous emulsified liquid, total solid content concentration: 40.5%) and 73 g of Nipol LX-112 (manufactured by Zeon Corporation, a styrene-butadiene copolymer 41% aqueous emulsified liquid, total solid content concentration: 40.5%) with 76 g of water, and adding 270 g of a resorcin-formaldehyde initial condensation dispersion liquid (the mole ratio of resorcin to formaldehyde was 1:1.5, total solid content concentration: 6.5%) as resorcin and formaldehyde into the diluted solution while slowly stirring the diluted solution. The obtained RFL liquid was diluted with 591 g of water to obtain a second treatment agent (total solid content concentration: 10%).

A polyester (polyethylene terephthalate (PET)) cord (configuration of cord: 1100/2 (dtex), number of twists of cord: 26 (times/10 cm), cord diameter: 0.54 mm, ends: 49 cords/5 cm) was immersed as an organic fiber into the first treatment agent, then dried at 150°C for 130 seconds, and subsequently thermally treated at 240°C for 130 seconds. Next, the polyester cord was immersed into the second treatment agent, then dried at 150°C for 130 seconds, and subsequently thermally treated at 240°C for 70 seconds. The treated polyester cord (organic fiber) was measured for initial adhesive force and heat-resistant adhesive force. The results are shown in Table 1. Ends refer to the number (count) of cords aligned in an arrangement direction when cords are arranged in parallel within a certain width, and the unit [cords/5 cm] is a unit representing the number of cords when the certain width is 5 cm.

### (Example 1-2)

An organic fiber was treated in the same manner as Example 1-1, except a polyester-nylon hybrid cord (configuration of cord: 1440-P/1400-N (dtex), number of twists of cord: 34 (times/10 cm), cord diameter: 0.67 mm, ends: 49 cords/5 cm) was used as the organic fiber. The treated polyester-nylon hybrid cord (organic fiber) was measured for initial adhesive force and heat-resistant adhesive force. The results are shown in Table 1.

### (Example 1-3)

An organic fiber was treated in the same manner as Example 1-1, except an aramid cord (configuration of cord: 1670/3 (dtex), number of twists of cord: 40 (times/10 cm), cord diameter: 0.85 mm, ends: 35 cords/5 cm) was used as the organic fiber. The treated aramid cord (organic fiber) was measured for initial adhesive force and heat-resistant adhesive force. The results are shown in Table 1.

### (Example 1-4)

An organic fiber was treated in the same manner as Example 1-1, except an aramid-nylon hybrid cord (configuration of cord: 1100-K/940-N (dtex), number of twists of cord: 42 (times/10 cm), cord diameter: 0.55 mm, ends: 49 cords/5 cm) was used as the organic fiber. The treated aramid-nylon hybrid cord (organic fiber) was measured for initial adhesive force and heat-resistant adhesive force. The results are shown in Table 1.

### (Example 1-5)

An organic fiber was treated in the same manner as Example 1-1, except a polyester (polyethylene naphthalate (PEN)) cord (configuration of cord: 1100/3 (dtex), number of twists of cord: 40 (times/10 cm), cord diameter: 0.72 mm, ends: 49 cords/5 cm) was used as the organic fiber. The treated polyethylene naphthalate (PEN) cord (organic fiber) was measured for initial adhesive force and heat-resistant adhesive force. The results are shown in Table 1.

### (Comparative Examples 1-1 to 1-5)

Organic fibers were treated in the same manner as Examples 1-1 to 1-5, respectively, except EX-614B (sorbitol polyglycidyl ether, chlorine content: 10.1% by weight, epoxy equivalent: 173, manufactured by Nagase ChemteX Corporation) was used as an epoxy compound. The treated organic fibers were measured for initial adhesive force and heat-resistant adhesive force. The results are shown in Table 1.

### (Comparative Example 1-6)

A nylon cord (configuration of cord: 940/2 (dtex), number of twists of cord: 48 (times/10 cm), cord diameter: 0.55 mm, ends: 49 cords/5 cm) was immersed as an organic fiber in the second treatment agent, then dried at 150°C for 130 seconds, and thermally treated at 240°C for 70 seconds. The treated nylon cord (organic fiber) was measured for initial adhesive force and heat-resistant adhesive force. The results are shown in Table 1.

**[Table 1]**

| | | Example 1-1 | Example 1-2 | Example 1-3 | Example 1-4 | Example 1-5 | |
|---|---|---|---|---|---|---|---|
| Organic fiber | | Polyester 1100/2 | Polyester-nylon hybrid 1440-P/1400-N | Aramid 1670/3 | Aramid-nylon hybrid 1100-K/940-N | PEN 1100/3 | |
| First treatment agent | Epoxy compound | ETC-N615 | ETC-N615 | ETC-N615 | ETC-N615 | ETC-N615 | |
| | Blocked isocyanate | ε-caprolactam blocked MDI* | ε-caprolactam blocked MDI* | ε-caprolactam blocked MDI* | ε-caprolactam blocked MDI* | ε-caprolactam blocked MDI* | |
| Second treatment agent | RFL (RF resin/latex) | RFL | RFL | RFL | RFL | RFL | |
| Adhesiveness | Initial adhesive force (N/cm) | 122 | 159 | 287 | 209 | 205 | |
| | Heat-resistant adhesive force (N/cm) | 121 | 158 | 226 | 189 | 188 | |

| | | Comparative Example 1-1 | Comparative Example 1-2 | Comparative Example 1-3 | Comparative Example 1-4 | Comparative Example 1-5 | Comparative Example 1-6 |
|---|---|---|---|---|---|---|---|
| Organic fiber | | Polyester 1100/2 | Polyester-nylon hybrid 1440-P/1400-N | Aramid 1670/3 | Aramid-nylon hybrid 1100-K/940-N | PEN 1100/3 | Nylon 940/2 |
| First treatment agent | Epoxy compound | EX-614B | EX-614B | EX-614B | EX-614B | EX-614B | - |
| | Blocked isocyanate | ε-caprolactam blocked MDI* | ε-caprolactam blocked MDI* | ε-caprolactam blocked MDI* | ε-caprolactam blocked MD1* | ε-caprolactam blocked MDI* | - |
| Second treatment agent | RFL (RF resin/latex) | RFL | RFL | RFL | RFL | RFL | RFL |
| Adhesiveness | Initial adhesive force (N/cm) | 130 | 166 | 236 | 175 | 176 | 121 |
| | Heat-resistant adhesive force (N/cm) | 108 | 140 | 189 | 152 | 151 | 116 |

| | | | | | | | |
|---|---|---|---|---|---|---|---|
| *: diphenylmethane diisocyanate | | | | | | | |

As shown in Comparative Example 1-1, the polyester cord treated with the conventional adhesive composition for an organic fiber has low heat-resistant adhesive force as compared to the nylon cord treated only with the second treatment agent in Comparative Example 1-6 (Comparative Example 1-1: 108 N/cm, Comparative Example 1-6: 116 N/cm).

However, as shown in Example 1-1, the polyester cord treated with the adhesive composition for an organic fiber according to the present disclosure has higher heat-resistant adhesive force than the nylon cord treated only with the second treatment agent in Comparative Example 1-6 (Example 1-1: 121 N/cm, Comparative Example 1-6: 116 N/cm). Furthermore, as is also obvious from Comparative Examples 1-2 to 1-5 and Examples 1-2 to 1-5, the heat-resistant adhesive force was significantly improved in each of the cases with various organic fibers treated with the adhesive composition for an organic fiber according to the present disclosure.

Adhesiveness in Examples 2-1 to 2-3 and Comparative Example 2-1 was evaluated by the following method.

### <Peeling Resistance>

The peeling resistance between a rubber composition and an organic fiber was evaluated as follows. A sample having a length of 150 mm in the circumferential direction of a tire (longitudinal direction) and a length of 25 mm in a direction perpendicular to the circumferential direction (widthwise direction: not the radial direction of the tire) was taken from the tire. A slit (cut) was formed between a band and a member radially outward of the band (for example, a belt) in the taken sample. Using a tensile tester, the band side and the member (for example, the belt) side radially outward of the band that had been separated by the slit (cut) were each pinched with parallel chucks, and the band side was pulled at a pulling speed of 50 mm/min in the circumferential direction of the tire. The force required for the pulling was indicated as a force per 25 mm of the sample in the circumferential direction (N/25 mm) and regarded as peeling resistance (N/25 mm).

### <High-Speed Durability>

A produced tire was continuously run at a speed of 100 km/h using a drum-type tire testing machine. The continuous running was carried out until the tire became broken, and the running distance at the time when the tire became broken was measured. The result was indicated as a relative value with the running distance of a tire, in which a nylon cord was used as an organic fiber included in a band, being 100, and this value was regarded as high-speed durability. As the nylon cord, a cord with 1400/2 dtex and 20-50 times/10 cm was used.

### (Example 2-1)

First, a band in which a rubber composition was in an uncrosslinked state was formed through the following procedure.

An adhesive composition for an organic fiber was prepared as a first treatment agent by adding 11.8 g of ETC-N615 (sorbitol polyglycidyl ether, chlorine content: 9.3% by weight, epoxy equivalent: 163, manufactured by Nagase ChemteX Corporation) as an epoxy compound to 920 g of water while stirring the water, and adding 72.1 g of an ε-caprolactam blocked diphenylmethane diisocyanate aqueous dispersion (54% concentration) as a blocked isocyanate thereto.

An RFL liquid was prepared as a rubber latex by diluting 172 g of Nipol 2518FS (manufactured by Zeon Corporation, a vinylpyridine-styrene-butadiene terpolymer aqueous emulsified liquid, total solid content concentration: 40.5%) and 73 g of Nipol LX-112 (manufactured by Zeon Corporation, a styrene-butadiene copolymer 41% aqueous emulsified liquid, total solid content concentration: 40.5%) with 76 g of water, and adding 270 g of a resorcin-formaldehyde initial condensation dispersion liquid (the mole ratio of resorcin to formaldehyde was 1:1.5, total solid content concentration: 6.5%) as resorcin and formaldehyde into the diluted solution while slowly stirring the diluted solution. The obtained RFL liquid was diluted with 591 g of water to obtain a second treatment agent (total solid content concentration: 10%).

A polyester (polyethylene terephthalate (PET)) cord (configuration of cord: 1100/2 (dtex), number of twists of cord: 26 (times/10 cm), cord diameter: 0.54 mm, ends: 49 cords/5 cm) was immersed as an organic fiber into the first treatment agent, then dried at 150°C for 130 seconds, and subsequently thermally treated at 240°C for 130 seconds. Next, the polyester cord was immersed into the second treatment agent, then dried at 150°C for 130 seconds, and subsequently thermally treated at 240°C for 70 seconds. Ends refer to the number (count) of cords aligned in an arrangement direction when cords are arranged in parallel within a certain width, and the unit [cords/5 cm] is a unit representing the number of cords when the certain width is 5 cm.

The organic fiber treated through the above procedure was embedded into an uncrosslinked rubber containing natural rubber as a main component, thereby forming a band in which a rubber composition was in an uncrosslinked state.

The composition of the uncrosslinked rubber containing natural rubber as a main component is as follows.
TSR20 (TSR is the abbreviation for Technically Specified Rubber): 60 parts by weight, as natural rubber
SBR 1502: 40 parts by weight, as styrene-butadiene rubber
"Seast 300" (manufactured by Tokai Carbon Co., Ltd.): 50 parts by weight, as a reinforcer
Mineral oil: 2 parts by weight, as a softener
"ROBO RD" (manufactured by Ouchi Shinko Chemical Industrial Co., Ltd.): 1 part by weight, as an antioxidant
Stearic acid: 3 parts by weight
Zinc oxide: 6 parts by weight
Powdery sulfur (manufactured by Tsurumi Chemical Industry Co., Ltd.): 4 parts by weight
"Nocceler NS" (manufactured by Ouchi Shinko Chemical Industrial Co., Ltd.: N-tert-butyl-2-benzothiazolylsulfenamide): 1.0 part by weight, as an accelerator

Next, a belt in which a rubber composition was in an uncrosslinked state was formed through the following procedure. Steel cords were arranged in parallel, and an uncrosslinked rubber containing natural rubber as a main component was placed on the steel cords so as to interpose the steel cords therein, whereby a belt in which a rubber composition was in an uncrosslinked state was produced.

Furthermore, the band in which the rubber composition was in an uncrosslinked state and the belt in which the rubber composition was in an uncrosslinked state were attached together with other tire members to form an uncrosslinked tire. Then, crosslinking reaction was caused to proceed by heating and pressing the uncrosslinked tire, whereby a tire was produced. The obtained tire was evaluated for peeling resistance and high-speed durability. The results are shown in Table 2.

### (Example 2-2)

A tire was produced in the same manner as Example 2-1, except a polyester (polyethylene naphthalate (PEN)) cord (configuration of cord: 1670 (dtex)/2, number of twists of cord: 35 (times/10 cm), cord diameter: 0.65 mm, ends: 49 cords/5 cm) was used as the organic fiber instead of the polyethylene terephthalate (PET) cord. The obtained tire was evaluated for peeling resistance and high-speed durability. The results are shown in Table 2.

### (Example 2-3)

A tire was produced in the same manner as Example 2-1, except a rayon cord (configuration of cord: 1840 (dtex)/2, number of twists of cord: 47 (times/10 cm), cord diameter: 0.76 mm, ends: 51 cords/5 cm) was used as the organic fiber instead of the polyethylene terephthalate (PET) cord. The obtained tire was evaluated for peeling resistance and high-speed durability. The results are shown in Table 2.

### (Comparative Example 2-1)

A tire was produced in the same manner as Example 2-1, except an adhesive composition for an organic fiber was prepared as a first treatment agent by using EX-614B (sorbitol polyglycidyl ether, chlorine content: 10.1% by weight, epoxy equivalent: 173, manufactured by Nagase ChemteX Corporation) as an epoxy compound instead of ETC-N615. The obtained tire was evaluated for peeling resistance and high-speed durability. The results are shown in Table 2.

**[Table 2]**

| | Example 2-1 | Example 2-2 | Example 2-3 | Comparative Example 2-1 |
|---|---|---|---|---|
| Organic fiber | Polyethylene terephthalate (PET) cord | Polyethylene naphthalate (PEN) cord | Rayon cord | Polyethylene terephthalate (PET) cord |
| Peeling resistance (N/25 mm) | 150 | 140 | 140 | 90 |
| High-speed durability | 140 | 130 | 120 | 110 |

As shown in Comparative Example 2-1, the tire in which the peeling resistance between the rubber composition and the organic fiber is less than 140 N/25 mm has inferior high-speed durability. On the other hand, as shown in Examples 2-1 to 2-3, the tires in which the peeling resistance between the rubber composition and the organic fiber is not less than 140 N/25 mm have excellent high-speed durability.

## Claims

1. An adhesive composition for an organic fiber, the adhesive composition containing:
(a) an epoxy compound that is a sorbitol polyglycidyl ether and has a chlorine content not greater than 9.6% by weight; and
(b) a blocked isocyanate.

2. The adhesive composition for the organic fiber according to claim 1, wherein the organic fiber is at least one type selected from the group consisting of polyester fibers, nylon fibers, aramid fibers and rayon fibers.

3. A method for treating an organic fiber comprising the steps of:
(1) treating the organic fiber with the adhesive composition for the organic fiber according to claim 1 as a first treatment agent; and
(2) treating the organic fiber treated with the first treatment agent, with a second treatment agent containing a resorcin-formalin-rubber latex (RFL).

4. The method for treating the organic fiber according to claim 3, wherein the organic fiber is at least one type selected from the group consisting of polyester fibers, nylon fibers, aramid fibers and rayon fibers.

5. An organic fiber treated with the adhesive composition for the organic fiber according to claim 1.

6. A tire comprising at least one or more members selected from the group consisting of a band, a carcass ply, a chafer, and a filler that include the organic fiber according to claim 5.

7. Tire according to claim 6 comprising a band, wherein
the band includes a rubber composition and an organic fiber according to claim 5, and peeling resistance between the rubber composition and the organic fiber is not less than 140 N/25 mm,
wherein the peeling resistance between the rubber composition and the organic fiber is evaluated as follows: a sample having a length of 150 mm in the circumferential direction of the tire (longitudinal direction) and a length of 25 mm in a direction perpendicular to the circumferential direction (widthwise direction: not the radial direction of the tire) is taken from the tire; a slit (cut) is formed between the band and a member radially outward of the band in the taken sample; using a tensile tester, the band side and the member side radially outward of the band that have been separated by the slit (cut) are each pinched with parallel chucks, and the band side is pulled at a pulling speed of 50 mm/min in the circumferential direction of the tire; the force required for the pulling is indicated as a force per 25 mm of the sample in the circumferential direction (N/25 mm) and regarded as peeling resistance (N/25 mm).

8. The tire according to claim 7, wherein the organic fiber is at least one type selected from the group consisting of polyester fibers, nylon fibers, aramid fibers, and rayon fibers.

9. The tire according to claim 7 or 8, wherein the organic fiber is at least one type selected from the group consisting of polyethylene terephthalate (PET) fibers, polyethylene naphthalate (PEN) fibers, and aramid fibers.

10. The tire according to any one of claims 7 to 9, wherein the organic fiber is subjected to an immersion treatment in the adhesive composition for the organic fiber.

11. The tire according to any one of claims 7 to 10, wherein
the rubber composition contains a rubber component, and
an amount of a polyisoprene-based rubber in 100% by weight of the rubber component is 0 to 70% by weight.

## Patentansprüche

1. Haftmittelzusammensetzung für eine organische Faser, wobei die Haftmittelzusammensetzung enthält:
(a) eine Epoxyverbindung, die ein Sorbitol-Polyglycidylether ist und einen Chlorgehalt aufweist, der nicht größer als 9,6 Gewichtsprozent ist; und
(b) ein blockiertes Isocyanat.

2. Haftmittelzusammensetzung für die organische Faser nach Anspruch 1, wobei die organische Faser mindestens ein Typ ist, der ausgewählt ist aus der Gruppe bestehend aus Polyesterfasern, Nylonfasern, Aramidfasern und Viskosefasern.

3. Verfahren zur Behandlung einer organischen Faser, welches die Schritte umfasst:
(1) Behandeln der organischen Faser mit der
Haftmittelzusammensetzung für die organische Faser nach Anspruch 1 als erstes Behandlungsmittel; und
(2) Behandeln der mit dem ersten Behandlungsmittel behandelten organischen Faser mit einem zweiten Behandlungsmittel, das einen Resorcin-Formalin-Kautschuklatex (RFL) enthält.

4. Verfahren zur Behandlung der organischen Faser nach Anspruch 3, wobei die organische Faser mindestens ein Typ ist, der ausgewählt ist aus der Gruppe bestehend aus Polyesterfasern, Nylonfasern, Aramidfasern und Viskosefasern.

5. Organische Faser, behandelt mit der Haftmittelzusammensetzung für die organische Faser nach Anspruch 1.

6. Reifen, der mindestens ein oder mehrere Teile umfasst, die ausgewählt sind aus der Gruppe bestehend aus einem Band, einer Karkassenlage, einem Wulstband und einem Füllstoff, welche die organische Faser nach Anspruch 5 enthalten.

7. Reifen nach Anspruch 6, der ein Band umfasst, wobei
das Band eine Kautschukzusammensetzung und eine organische Faser nach Anspruch 5 enthält, und die Schälfestigkeit zwischen der Kautschukzusammensetzung und der organischen Faser nicht weniger als 140 N/25 mm beträgt,
wobei die Schälfestigkeit zwischen der Kautschukzusammensetzung und der organischen Faser wie folgt bewertet wird: ein Probenstück mit einer Länge von 150 mm in der Umfangsrichtung des Reifens (Längsrichtung) und einer Länge von 25 mm in einer zur Umfangsrichtung senkrechten Richtung (Breitenrichtung: nicht die Radialrichtung des Reifens) wird dem Reifen entnommen; ein Schlitz (Schnitt) wird zwischen dem Band und einem Teil gebildet, das in dem entnommenen Probenstück radial außerhalb des Bands ist; unter Verwendung eines Zugprüfgeräts werden die Bandseite und die Seite des Teils, das radial außerhalb des Bands ist, welche durch den Schlitz (Schnitt) voneinander getrennt worden sind, jeweils mit parallelen Einspannvorrichtungen festgeklemmt, und die Bandseite wird mit einer Zuggeschwindigkeit von 50 mm/min in der Umfangsrichtung des Reifens gezogen; die für das Ziehen benötigte Kraft wird als Kraft pro 25 mm des Probenstücks in der Umfangsrichtung (N/25 mm) angegeben und als Schälfestigkeit (N/25 mm) angesehen.

8. Reifen nach Anspruch 7, wobei die organische Faser mindestens ein Typ ist, der ausgewählt ist aus der Gruppe bestehend aus Polyesterfasern, Nylonfasern, Aramidfasern und Viskosefasern.

9. Reifen nach Anspruch 7 oder 8, wobei die organische Faser mindestens ein Typ ist, der ausgewählt ist aus der Gruppe bestehend aus Polyethylenterephthalat (PET)-Fasern, Polyethylennaphthalat (PEN)-Fasern und Aramidfasern.

10. Reifen nach einem der Ansprüche 7 bis 9, wobei die organische Faser einer Eintauchbehandlung in der Haftmittelzusammensetzung für die organische Faser unterzogen ist.

11. Reifen nach einem der Ansprüche 7 bis 10, wobei
die Kautschukzusammensetzung eine Kautschukkomponente enthält, und
eine Menge eines Polyisopren-basierten Kautschuks in 100 Gewichtsprozent der Kautschukkomponente 0 bis 70 Gewichtsprozent beträgt.

## Revendications

1. Composition adhésive pour fibre organique, la composition adhésive contenant :
(a) un composé époxy qui est un éther de polyglycidyle sorbitol et a une teneur en chlore de pas plus de 9,6 % en poids ; et
(b) un isocyanate bloqué.

2. Composition adhésive pour la fibre organique selon la revendication 1, dans laquelle la fibre organique est au moins un type choisi dans le groupe constitué par les fibres de polyester, les fibres de nylon, les fibres d'aramide et les fibres de rayon.

3. Procédé de traitement de fibre organique, comprenant les étapes consistant à :
(1) traiter la fibre organique avec la composition adhésive pour la fibre organique selon la revendication 1 comme premier agent de traitement ; et
(2) traiter la fibre organique traitée avec le premier agent de traitement, avec un second agent contenant un latex de résorcine-formaline-caoutchouc (RFL).

4. Procédé de traitement de la fibre organique selon la revendication 3, dans lequel la fibre organique est au moins un type choisi dans le groupe constitué par les fibres de polyester, les fibres de nylon, les fibres d'aramide et les fibres de rayon.

5. Fibre organique traitée avec la composition adhésive pour la fibre organique selon la revendication 1.

6. Pneumatique comprenant au moins un ou plusieurs éléments choisi dans le groupe constitué par une bande de roulement, un pli de carcasse, un tablier et une charge qui comprennent la fibre organique selon la revendication 5.

7. Pneumatique selon la revendication 6, comprenant une bande de roulement, dans lequel
la bande de roulement comprend une composition de caoutchouc et une fibre organique selon la revendication 5, et la résistance au décollement entre la composition de caoutchouc et la fibre organique est de pas moins de 140 N/25 mm,
la résistance au décollement entre la composition de caoutchouc et la fibre organique étant évaluée comme suit : un échantillon ayant une longueur de 150 mm dans la direction circonférentielle du pneumatique (direction longitudinale) et une longueur de 25 mm dans une direction perpendiculaire à la direction circonférentielle (direction de la largeur : pas la direction radiale du pneumatique) est prélevé du pneu ; une fente (coupure) est formée entre la bande et un élément radialement à l'extérieur de la bande dans l'échantillon prélevé ; en utilisant un testeur de traction, le côté de bande de roulement et le côté de l'élément radialement à l'extérieur de la bande de roulement qui ont été séparés par la fente (coupure) sont chacun pincés avec des mandrins parallèles, et le côté de bande de roulement est tiré à une vitesse de tirage de 50 mm/minute dans la direction circonférentielle du pneumatique ; la force requise pour le tirage est indiquée comme une force par 25 mm de l'échantillon dans la direction circonférentielle (N/25 mm) et considérée comme la résistance au décollement (N/25 mm).

8. Pneumatique selon la revendication 7, dans lequel la fibre organique est au moins un type choisi dans le groupe constitué par les fibres de polyester, les fibres de nylon les fibres d'aramide, et les fibres de rayon.

9. Pneumatique selon la revendication 7 ou 8, dans lequel la fibre organique est au moins un type choisi dans le groupe constitué par les fibres de téréphtalate de polyéthylène (PET), les fibres de naphtalate de polyéthylène (PEN), et les fibres d'aramide.

10. Pneumatique selon l'une quelconque des revendications 7 à 9, dans lequel la fibre organique est soumise à un traitement par immersion dans la composition organique pour la fibre adhésive.

11. Pneumatique selon l'une quelconque des revendication 7 à 10, dans lequel la composition de caoutchouc contient un composant de caoutchouc, et une quantité d'un caoutchouc à base de polyisoprène dans 100 % en poids du composant de caoutchouc est de 0 à 70 % en poids.
